# EUROPEAN PATENT SPECIFICATION

(11) **EP 4 087 339 B1**
(45) Date of publication and mention of the grant of the patent: **31.01.2024**
(21) Application number: 21172441.4
(22) Date of filing: 06.05.2021
(51) Int. Cl.: H04W 64/00, G01S 5/02

(54) **ACTIVE TAG, ANCHOR NODE, AND POSITIONING METHOD**
AKTIVES ETIKETT, ANKERKNOTEN UND POSITIONIERUNGSVERFAHREN
ÉTIQUETTE ACTIVE, NOEUD D'ANCRAGE ET PROCÉDÉ DE POSITIONNEMENT

(43) Date of publication of application: 09.11.2022
(73) Proprietor: Haltian Oy, 90230 Oulu (FI)
(72) Inventor: Tuhkala, Marko, 90230 Oulu (FI)
(74) Representative: Kolster Oy Ab

(56) References cited:
- EP-B1- 2 880 593
- WO-A1-2020/007446
- US-B2- 7 614 556

## Description

### FIELD

Various embodiments relate to an active tag, an anchor node, and a positioning method using the active tag and the anchor node.

### BACKGROUND

An active tag operates with a limited power supply, and with a radio transceiver operating with a short communication range, utilizing the Bluetooth low energy technology, for example. If a large number of active tags are located in a small area, in a container or in a warehouse, for example, the communication between a reader and all the active tags may be time and resource consuming or even impossible due to a radio frequency congestion. Not to speak of a positioning of the active tag, which is practically impossible in such a scenario. For the general communication problem, the applicant has provided a solution in WO 2020/007446 A1. It seems that the active tag usually operates with a relatively simple antenna, whereas the reader may employ more advanced antenna structures, see for example US 7,614,556 B2 and US 9,860,688 B2. EP2880593 deals with remotely remotely identifying and locating objects using radio frequency identification (RFID) signalling.

### BRIEF DESCRIPTION

According to an aspect, there is provided subject matter of independent claims. Dependent claims define some embodiments.

One or more examples of implementations are set forth in more detail in the accompanying drawings and the description of embodiments.

### LIST OF DRAWINGS

Some embodiments will now be described with reference to the accompanying drawings, in which
FIG. 1 illustrates embodiments of an an anchor node and an active tag;
FIG. 2, FIG. 3, and FIG. 4 illustrate embodiments of an antenna;
FIG. 5, FIG. 6, and FIG. 7 illustrate embodiments of radio communication between the anchor node and the active tag; and
FIG. 8 is a flow chart illustrating embodiments of a positioning method using an active tag and an anchor node.

### DESCRIPTION OF EMBODIMENTS

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

Reference numbers, both in the description of the embodiments and in the claims, serve to illustrate the embodiments with reference to the drawings, without limiting it to these examples only.

The embodiments and features, if any, disclosed in the following description that do not fall under the scope of the independent claims are to be interpreted as examples useful for understanding various embodiments of the invention.

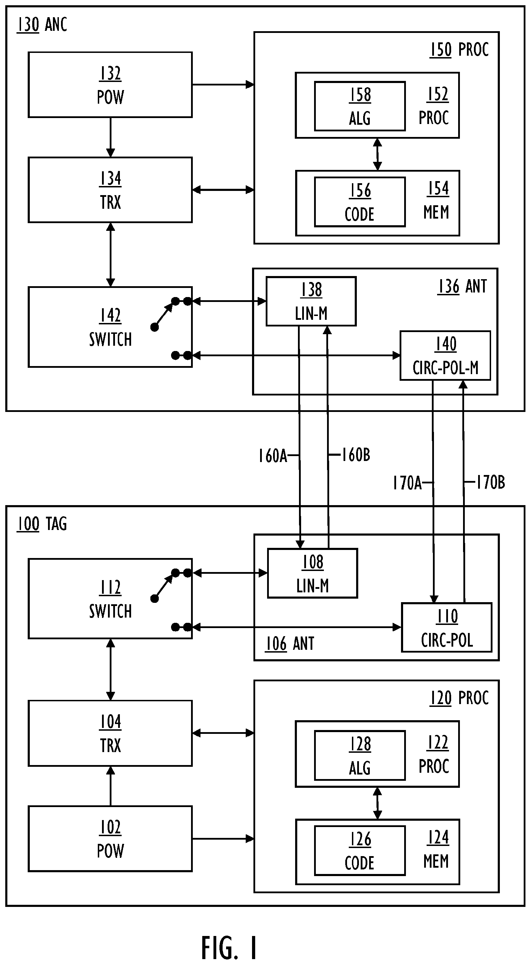

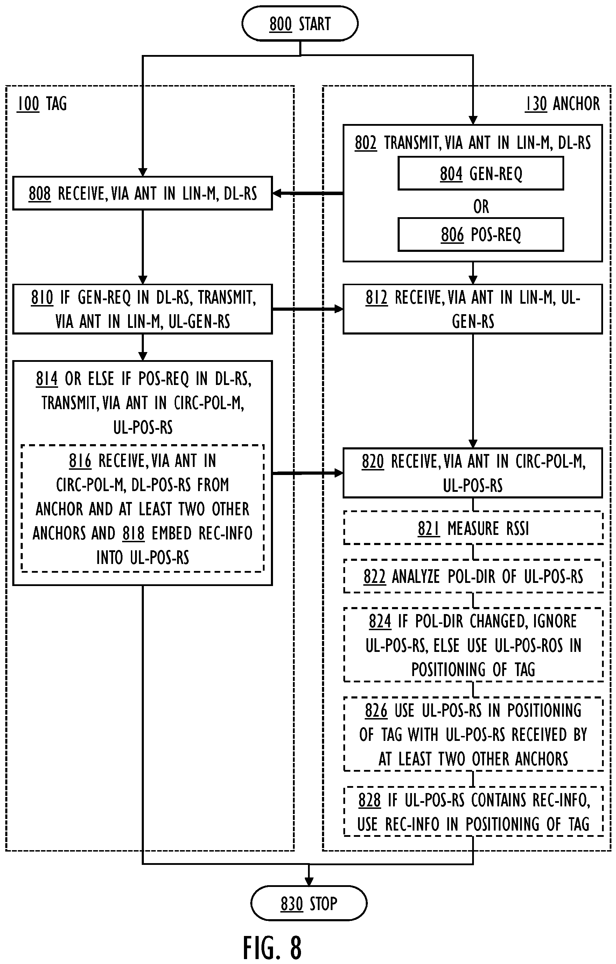

Let us study simultaneously FIG. 1, which illustrates embodiments of an anchor node 130 and an active tag 100, and FIG. 8, which illustrates embodiments of a positioning method using the active tag 100 and the anchor node 130.

The active tag 100 comprises a power source 102 to provide electric energy for various operations, especially for a radio transceiver 104 and a processor 120. The power source 102 may be a battery (disposable or rechargeable) or another type of a portable energy storage.

For radio communications, the active tag 100 comprises the radio transceiver 104, an antenna 106, and an antenna switch 112 configured to switch the antenna 106 between a linear mode 108 and a circular polarized mode 110.

The radio transceiver 104 may operate according to any of the various standard/proprietary technologies utilizing various frequency bands and communication protocols. Standards include, but are not limited to 802.11 WLAN and various Bluetooth standards including Bluetooth low energy, BLE.

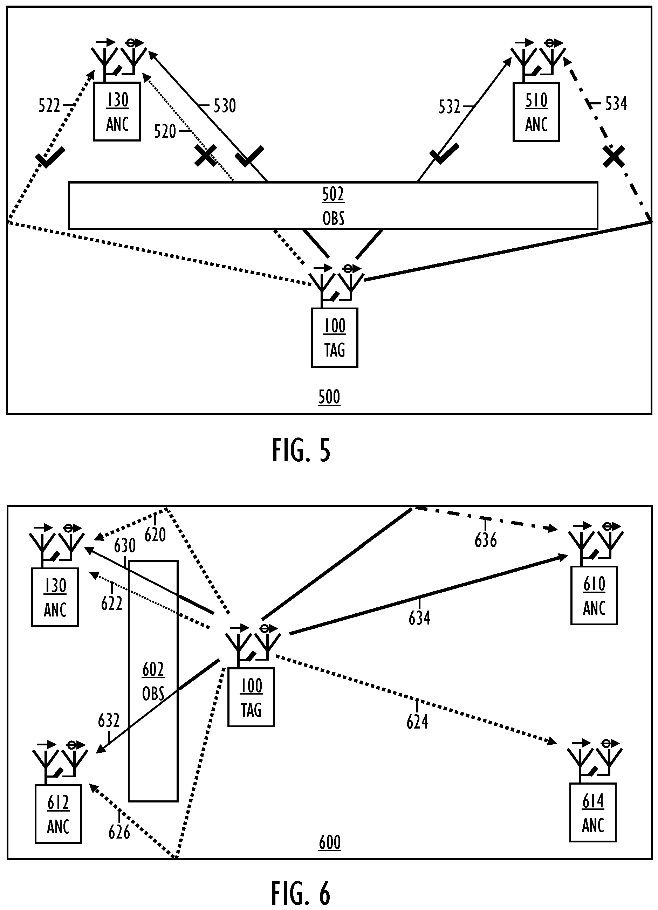

The linear mode 108 of the antenna 106 is configured to concentrate radio frequency energy in a narrow plane (like through a narrow slit in a hose). The antenna beam in the linear mode 108 may be horizontal, vertical or slant. As illustrated in FIG. 5, the linear signal 520, 522 is emitted from the active tag 100 to a specific direction, whereby it may only reach the anchor node 130 as the signal 522 reflected from a wall of the space 500, whereas the signal 520 is obstructed by an obstacle 520 in the space 520 to reach the anchor node 130.

The circular polarized mode 110 of the antenna 106 is configured to emit radio frequency energy in a conical pattern (like a corkscrew becoming larger as the energy advances further from the antenna 106). The antenna beam in the circular polarized mode 110 may be a right-handed corkscrew or a left-handed corkscrew. As illustrated in FIG. 5, the circular polarized signal 530, 532, 534 is emitted from the active tag 100 to a much wider angle than the linear signal 520, 522. It is also to be noted that the circular polarized signals 530, 532 are able to bypass the obstacle 502 in the space 500 to reach the anchor node 130 and also an additional anchor node 510. Note that while the circular polarized signal 534 also reaches the additional anchor node 510, but as it is reflected once from a wall of the space 534, a polarization direction of the reflected circular polarized signal 534 has changed into an opposite direction as compared to an expected direction, and it may thus be considered not suitable for a positioning of the active tag 100 as will be later explained. Direct signals may provide a better positioning accuracy when compared to reflected signals.

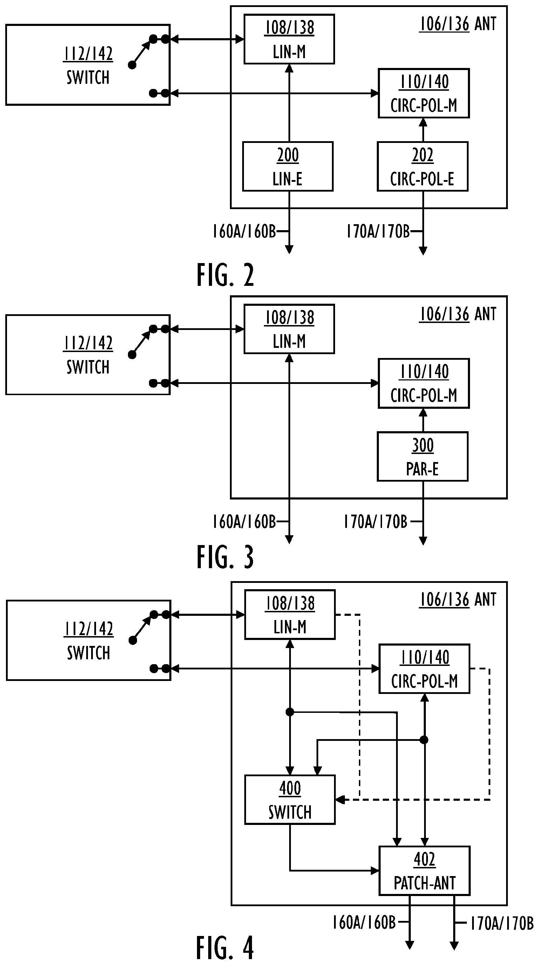

FIG. 2 illustrates an embodiment, wherein the antenna 106 comprises a linear antenna element 200 configured to operate in the linear mode 108, and a circular polarized antenna element 202 configured to operate in the circular polarized mode 110. In this way, the antenna 106 may comprise separate elements for each mode 108, 110.

FIG. 3 illustrates an embodiment, wherein the antenna 106 comprises a parasitic antenna element 300, configured to, when switched off by the antenna switch 112, activate the linear mode 108, and, when switched on by the antenna switch 112, activate the circular polarized mode 110. In this way, the antenna 106 operates as a linear antenna in a default mode, whereas the switched on parasitic element 300 changes the antenna 106 to operate as a circular polarized antenna in an alternative mode.

FIG. 4 illustrates an embodiment, wherein the antenna 106 comprises a dual-input patch antenna 402 with a switch 400 in one of the inputs configured to operate the antenna 106 in the linear mode 108 or in the circular polarized mode 110. The switch 400 may be fed with a 1/4 λ (wavelength) of the antenna feed and switched on and off according to a specific scheme to implement the circular polarized mode 110.

The active tag also comprises a processor 120 configured to cause a performance of the active tag 100.

Note that the active tag 100 may also comprise other parts not described here such as a waterproof/dustproof/shockproof casing configured to protect the electronics, and a fixing configured to attach the active tag 100 to a product or its package, for example.

In an embodiment illustrated in FIG. 1, the processor 120 comprises one or more memories 124 including computer program code 126 and one or more processors 122, configured to execute the computer program code 126 to cause the performance of the active tag 100 as the algorithm/method 128 of FIG. 8. In an alternative embodiment, the processor 120 comprises a circuitry configured to cause the performance of the apparatus as the algorithm/method 128.

In an embodiment, the active tag 100 may be a general-purpose or application-specific off-the-shelf tag, as opposed to a purpose-build proprietary equipment, whereby research & development costs will be lower as only the special-purpose software (and not the hardware) needs to be designed, implemented, and tested. The applicant, Haitian Oy, designs and manufactures such active tags 100.

A non-exhaustive list of implementation techniques for the processor 120, 122 and the memory 124, or the circuitry includes, but is not limited to: logic components, standard integrated circuits, application-specific integrated circuits (ASIC), system-on-a-chip (SoC), application-specific standard products (ASSP), microprocessors, microcontrollers, digital signal processors, special-purpose computer chips, field-programmable gate arrays (FPGA), and other suitable electronics structures.

The term 'memory' 124 refers to a device that is capable of storing data run-time (= working memory) or permanently (= non-volatile memory). The working memory and the non-volatile memory may be implemented by a random-access memory (RAM), dynamic RAM (DRAM), static RAM (SRAM), a flash memory, a solid state disk (SSD), PROM (programmable read-only memory), a suitable semiconductor, or any other means of implementing an electrical computer memory.

The computer program code (or software) 126 may be written by a suitable programming language (such as C, C++, assembler or machine language, for example), and the resulting executable code may be stored in the memory 124 and run by the processor 122. The computer program code 126 may be in source code form, object code form, executable form, or in some intermediate form, but for use in the one or more processors 122 it is in the executable form. There are many ways to structure the computer program code 126: the operations may be divided into modules, sub-routines, methods, classes, objects, applets, macros, etc., depending on the software design methodology and the programming language used. In modern programming environments, there are software libraries, i.e. compilations of ready-made functions, which may be utilized by the computer program code 126 for performing a wide variety of standard operations. In addition, an operating system (such as a general-purpose operating system or a real-time operating system) may provide the computer program code 126 with system services.

The anchor node 130 also comprises a power source 132, a radio transceiver 134, an antenna 136, an antenna switch 142 configured to switch the antenna 136 between a linear mode 138 and a circular polarized mode 140, and a processor 150 configured to cause a performance of the anchor node 130 as the algorithm/method 158.

In principle, the anchor node 130 may be implemented with similar technologies as explained above for the active tag 100. Naturally, some differences may exist. The power source 132 may be, alternatively or additionally, a connection to an external power source such as the mains. The differences may also be caused by different roles of the active tag 100 and the anchor node 130: the active tag 100 may be attachable to a product, whereas the anchor node 130 may be fixedly positioned within the space 500 (such as the warehouse or the container, for example). Naturally, the active tag 100 may be a more integrated product, including a microcontroller implementing the processor 120 and the radio transceiver 104, whereas the anchor node 130 may be include more powerful data processing capacity in the processor 150 and also a radio transceiver 134 with a more powerful transmitter and a better receiver, and a more complicated antenna 136, for example. The antenna 136 of the anchor node 130 may also be implemented as described above for the active tag 100 with reference to FIG. 2, FIG. 3, and FIG. 4.

Now that the general structures of the active tag 100 and the anchor node 130 have been described, let us study the dynamics of the algorithm/method 128, 158 with reference to FIG. 8.

The method starts in 800 and ends in 830. Note that the method is actually divided into two methods: the method/algorithm 128 in the active tag 100 comprising operations 808-810-814-816-818, and the method/algorithm 158 in the anchor node 130 interoperable with the active tag 100 and comprising operations 802-804-806-812-820-821-822-824-826-828. The method may run as long as necessary, looping back from the last operation to the first operation.

The operations are not strictly in chronological order in FIG. 8, and some of the operations may be performed simultaneously or in an order differing from the given ones. Other functions may also be executed between the operations or within the operations and other data exchanged between the operations. Some of the operations or part of the operations may also be left out or replaced by a corresponding operation or part of the operation. It should be noted that no special order of operations is required, except where necessary due to the logical requirements for the processing order.

In 808, the active tag 100 receives, by the radio transceiver 104 via the antenna 106 in the linear mode 108, a downlink radio signal 160A from the anchor node 130.

In 810 a test is made in the active tag 100: if the downlink radio signal 160A comprises a general request 804, the active tag 100 transmits, by the radio transceiver 104 via the antenna 106 in the linear mode 108, an uplink general radio signal 160B to the anchor node 130.

In 814, the test continues in the active tag 100: or else if the downlink radio signal 160A comprises a position request 806, the active tag 100 switches, using the antenna switch 112, the antenna 106 into the circular polarized mode 110, and transmits, by the radio transceiver 104 via the antenna 106 in the circular polarized mode 110, an uplink positioning radio signal 170B to the anchor node 130.

This sequence 808-810-814 of the algorithm 128 performed by the active tag 100 is matched by a synchronized sequence 802-804-806-812-820 of the algorithm 158 in the anchor node 130.

In 802, the anchor node 130 transmits, by the radio transceiver 134 via the antenna 136 in the linear mode 138, the downlink radio signal 160A comprising the general request 804 to the active tag 100.

In 812, the anchor node 130 receives, by the radio transceiver 134 via the antenna 136 in the linear mode 138, the uplink general radio signal 160B from the active tag 100 in response to the general request 804.

In 802, the anchor node transmits, by the radio transceiver 134 via the antenna 136 in the linear mode 138, the downlink radio signal 160A comprising the position request 806 to the active tag 100.

In 820, the anchor node 130 switches, using the antenna switch 142, the antenna 136 into the circular polarized mode 150, and receives, by the radio transceiver 134 via the antenna 136 in the circular polarized mode 140, the uplink positioning radio signal 170B from the active tag 100 in response to the position request 806.

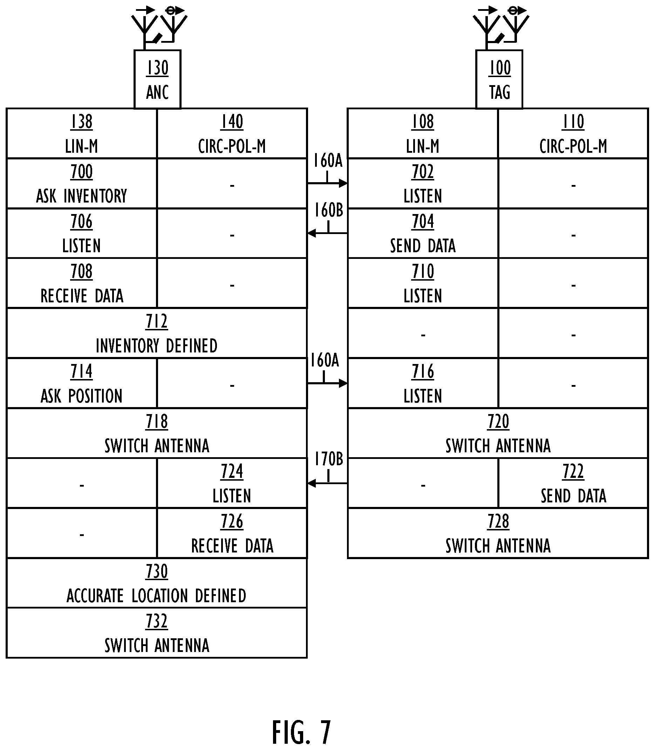

Note that the downlink radio signal 160A may include either a general request 804 or a position request 806. The general request 804 may in principle be any request that does not require a positioning of the active tag 100. FIG. 7 illustrates an embodiment, wherein the general request 804 is an inventory request.

In an embodiment of the anchor node 130, the processor 150 is configured to cause performance of at least the following: measuring 821 a received signal strength from the uplink positioning radio signal 170B for use in a positioning of the active tag 100. The received signal strength indicates a power present in the received uplink positioning radio signal 170B. The received signal strength may be RSSI (Received Signal Strength Indication), for example.

The described sequence results in a more accurate indoor positioning without complex antenna arrays, causes less absorption into materials, requires less processing capacity and thus less power needed for the anchor nodes 130. The linear mode 108, 138 has a higher antenna gain, whereas the circular polarized mode 110, 140 has less reflections.

FIG. 7 also illustrates that the general request 804 is dealt using the linear modes 108, 138, and the position request 806 using both the linear modes 108, 138 and the circular polarized modes 110, 140. The default operation mode for both antennas 106, 136 of the active tag 100 and the anchor node 130 are the linear modes 108, 138. The anchor node 130 asks 700 the inventory with the downlink radio signal 160A in the linear mode 138. As the active tag 100 is listening 702, it receives the downlink radio signal 160A in the linear mode 108. The active tag 100 responds by sending 704 data in the uplink general radio signal 160B in the linear mode 108. As the anchor node 130 is listening 706, it receives 708 the uplink general radio signal 160B in the linear mode 138. After sending 710 the uplink general radio signal 160B, the active tag 100 returns to listening 710 the downlink. After receiving 708 the data, the anchor node 130 concludes 712 that the inventory is defined for the active tag 100. For the inventory purposes, it may suffice that a presence of the active tag 100 is detected.

Next, the anchor node 130 asks 714 the position with the downlink radio signal 160A in the linear mode 138, and after that switches 718 the antenna 136 from the linear mode 138 to the circular polarized mode 140. Again, the active tag is listening 716 in the linear mode 108 and thus receives the downlink radio signal 160. The active tag 100 switches 720 the antenna 106 from the linear mode 108 to the circular polarized mode 110, and transmits 722 the uplink positioning radio signal 170B in the circular polarized mode 110. The anchor node 130 is listening 724 and receiving 726 the uplink positioning radio signal 170B. The anchor node 130 concludes 730 that the accurate location is defined. This requires co-operation from at least two additional anchor nodes, which also receive the uplink positioning radio signal 170B. As shown in FIG. 7, both the anchor node 130 and the active tag 100 switch their antennas 106, 136 back to the (default) linear mode 108, 138, and are thus ready to repeat the communication sequencies for the inventory and/or for the positioning as described.

Let us next study FIG. 6, which illustrates some additional embodiments.

The active tag 100 transmits in the linear mode 108 of the antenna 106 the uplink general radio signal 160B, which is received as a signal 620 reflected from a wall of the space 600 by the anchor node 130 in the linear mode 138. The uplink general radio signal 160B also propagates as an attenuated signal 622 through an obstacle 602 in a space 600, but it may be received or may not be received by the anchor node 130 in the linear mode 138 due to the attenuation. Note that as the anchor node 130 only needs to receive the uplink general radio signal 160B, and not measure its received signal strength, the reflected signal 620 is good for its purpose. In some use cases, the uplink general radio signal 160B may also be received as a direct signal 624 by a third additional anchor node 614 in the linear mode, and as a reflected signal 626 by a second additional anchor node 612 in the linear mode. Note that it depends on the internal state of each additional anchor node 612, 614 whether it really receives the signal 624, 626.

The active tag 100 transmits in the circular polarized mode 110 of the antenna 106 the uplink positioning radio signal 170B, which is received as attenuated signals 630, 632 through the obstacle 602 by the anchor node 130 in the circular polarized mode 140 of the antenna 136, and by the second additional anchor node 612 in the circular polarized mode. The uplink positioning radio signal 170 is also received as a direct signal 634 and as a reflected signal 636 by a first additional anchor node 610 in the circular polarized mode.

In an embodiment of the anchor node 130, the processor 150 is configured to cause performance of at least the following: analyzing 822 a polarization direction of the uplink positioning radio signal 170B, such as the reflected signal 634, and if 824 the polarization direction has changed into an opposite direction as compared to an expected direction, ignoring the uplink positioning radio signal 170B, or else using the uplink positioning radio signal 170B in a positioning of the active tag 100. Reflections can be separated because the polarization inverts in the reflection. Naturally, two reflections in the radio path result in a non-inverted signal, but this is a relatively rare phenomenon and does not therefore degrade the positioning too much.

In an embodiment of the anchor node 130, the processor 150 is configured to cause performance of at least the following: using 826 the uplink positioning radio signal 170B in a positioning of the active tag 100 together with a plurality of uplink positioning radio signals received by at least two additional anchor nodes. The positioning of the active tag 100 may be performed using a well-known triangulation technique, wherein the position of the active tag 100 is calculated using the known fixed locations of the anchor nodes 130, 610, 612, 614, and the received signal strength values measured by the anchor nodes 130, 610, 612, 614 from the uplink positioning radio signal 170B.

Consequently, besides the anchor node 130, the additional anchor nodes 610, 612, 614 need to be set in a state where each uses the circular polarized mode of its antenna to receive the uplink positioning radio signal 170B. In the sequence of FIG. 7, the anchor node 130 signals this to the additional anchor nodes 610, 612, 614 in connection to asking 714 the position. Note that the received signal strength values measured from the uplink general radio signal 160B in the linear mode 108, 138 cannot be used because reflections cannot be separated from direct signals and received signal strength values therefore vary heavily. Additionally, or alternatively, each anchor node 130, 610, 612, 614 may time-stamp the received uplink general radio signal 160B or time-stamp the received signal strength values, so that it may be ascertained for the positioning of the active tag 100 that valid data is used. A synchronization between the anchor nodes 130, 610, 612, 614 may thus be achieved by commands or the timestamping, possibly augmented by a common clock or other timing source, for example.

If the downlink general radio signal 160A transmitted by the anchor node 130 is not received by the active tag 100, the anchor node 130 may signal one or more of the additional anchor nodes 610, 612, 614 to transmit the downlink general radio signal 160A.

In an embodiment, the active tag 100 may also measure received signal strength values from a plurality of downlink positioning radio signals 170A from the anchor node 130 and at least two additional anchor nodes. The active tag 100 then operates as follows: if the downlink radio signal 160A comprises the position request 806, after switching the antenna 106 into the circular polarized mode 110, and before transmitting the uplink positioning radio signal 170B to the anchor node 130, the processor 120 is configured to cause performance of at least the following: receiving 816, by the radio transceiver 104 via the antenna 106 in the circular polarized mode 110, a plurality of downlink positioning radio signals 170A from the anchor node 130 and at least two additional anchor nodes, and embedding 818 information (such as the received signal strength values) regarding reception of the plurality of the downlink positioning radio signals 170A into the uplink positioning radio signal 170B. The anchor node 130 operates so that the processor 150 is configured to cause performance of at least the following: if 828 the uplink positioning radio signal 170B contains the information regarding the reception of the plurality of the downlink positioning radio signals 170A by the active tag 100, using the information (such as the received signal strengths) regarding the reception of the plurality of the downlink positioning radio signals 170A by the active tag 100 in a positioning of the active tag 100.

In an embodiment, a calibration may be performed in the space 500, 600 to improve the accuracy of the positioning of the active tag 100. In the calibration, the active tag 100 may be placed in a certain place within the space 500, 600, and after the positioning of the active tag 100 is made according to the described method, the exact position may be ascertained within the space 500, 600, and a correction may be defined for the positioning. This may be implemented so that the position resulting from the positioning of the active tag 100 is moved into the ascertained exact position on a map illustrating the space 500, 600.

Even though the invention has been described with reference to one or more embodiments according to the accompanying drawings, it is clear that the invention is not restricted thereto but can be modified in several ways within the scope of the appended claims. All words and expressions should be interpreted broadly, and they are intended to illustrate, not to restrict, the embodiments. It will be obvious to a person skilled in the art that, as technology advances, the inventive concept can be implemented in various ways.

## Claims

1. An active tag (100), comprising:
a power source (102);
a radio transceiver (104);
an antenna (106);
an antenna switch (112) configured to switch the antenna (106) between a linear mode (108) and a circular polarized mode (110); and
a processor (120) configured to cause performance of at least the following:
receiving (808), by the radio transceiver (104) via the antenna (106) in the linear mode (108), a downlink radio signal (160A) from an anchor node (130);
if (810) the downlink radio signal (160A) comprises a general request (804), transmitting, by the radio transceiver (104) via the antenna (106) in the linear mode (108), an uplink general radio signal (160B) to the anchor node (130);
or else if (814) the downlink radio signal (160A) comprises a position request (806), switching, using the antenna switch (112), the antenna (106) into the circular polarized mode (110), and transmitting, by the radio transceiver (104) via the antenna (106) in the circular polarized mode (110), an uplink positioning radio signal (170B) to the anchor node (130).

2. The active tag of claim 1, wherein the antenna (106) comprises:
a linear antenna element (200) configured to operate in the linear mode (108), and a circular polarized antenna element (202) configured to operate in the circular polarized mode (110); or
a parasitic antenna element (300), configured to, when switched off by the antenna switch (112), activate the linear mode (108), and, when switched on by the antenna switch (112), activate the circular polarized mode (110); or
a dual-input patch antenna (402) with a switch (400) in one of the inputs configured to operate the antenna (106) in the linear mode (108) or in the circular polarized mode (110).

3. The active tag of any preceding claim 1-2, wherein if the downlink radio signal (160A) comprises the position request (806), after switching the antenna (106) into the circular polarized mode (110), and before transmitting the uplink positioning radio signal (170B) to the anchor node (130), the processor (120) is configured to cause performance of at least the following:
receiving (816), by the radio transceiver (104) via the antenna (106) in the circular polarized mode (110), a plurality of downlink positioning radio signals (170A) from the anchor node (130) and at least two additional anchor nodes; and
embedding (818) information regarding reception of the plurality of the downlink positioning radio signals (170A) into the uplink positioning radio signal (170B).

4. An anchor node (130) for the active tag (100) of any preceding claim 1-3, the anchor node (130) comprising:
a power source (132);
a radio transceiver (134);
an antenna (136);
an antenna switch (142) configured to switch the antenna (136) between a linear mode (138) and a circular polarized mode (140); and
a processor (150) configured to cause performance of at least the following:
transmitting (802), by the radio transceiver (134) via the antenna (136) in the linear mode (138), the downlink radio signal (160A) comprising the general request (804) to the active tag (100);
receiving (812), by the radio transceiver (134) via the antenna (136) in the linear mode (138), the uplink general radio signal (160B) from the active tag (100) in response to the general request (804);
transmitting (802), by the radio transceiver (134) via the antenna (136) in the linear mode (138), the downlink radio signal (160A) comprising the position request (806) to the active tag (100); and
switching, using the antenna switch (142), the antenna (136) into the circular polarized mode (150), and receiving (820), by the radio transceiver (134) via the antenna (136) in the circular polarized mode (140), the uplink positioning radio signal (170B) from the active tag (100) in response to the position request (806).

5. The anchor node of claim 4, wherein the antenna (136) comprises:
a linear antenna element (200) configured to operate in the linear mode (138), and a circular polarized antenna element (202) configured to operate in the circular polarized mode (140); or
a parasitic antenna element (300), configured to, when switched off by the antenna switch (142), activate the linear mode (138), and, when switched on by the antenna switch (142), activate the circular polarized mode (140); or
a dual-input patch antenna (402) with a switch (400) in one of the inputs configured to operate the antenna (136) in the linear mode (138) or in the circular polarized mode (140).

6. The anchor node of any preceding claim 4-5, wherein the processor (150) is configured to cause performance of at least the following:
measuring (821) a received signal strength from the uplink positioning radio signal (170B) for use in a positioning of the active tag (100).

7. The anchor node of any preceding claim 4-6, wherein the processor (150) is configured to cause performance of at least the following:
analyzing (822) a polarization direction of the uplink positioning radio signal (170B); and
if (824) the polarization direction has changed into an opposite direction as compared to an expected direction, ignoring the uplink positioning radio signal (170B), or else using the uplink positioning radio signal (170B) in a positioning of the active tag (100).

8. The anchor node of any preceding claim 4-7, wherein the processor (150) is configured to cause performance of at least the following:
using (826) the uplink positioning radio signal (170B) in a positioning of the active tag (100) together with a plurality of uplink positioning radio signals received by at least two additional anchor nodes.

9. The anchor node of any preceding claim 4-8, wherein the processor (150) is configured to cause performance of at least the following:
if (828) the uplink positioning radio signal (170B) contains the information regarding the reception of the plurality of the downlink positioning radio signals (170A) by the active tag (100), using the information regarding the reception of the plurality of the downlink positioning radio signals (170A) by the active tag (100) in a positioning of the active tag (100).

10. A positioning method using an active tag and an anchor node, comprising:
receiving (808), by the active tag via its antenna in a linear mode, a downlink radio signal from the anchor node;
if (810) the downlink radio signal comprises a general request, transmitting, by the active tag via the antenna in the linear mode, an uplink general radio signal to the anchor node;
or else if (814) the downlink radio signal comprises a position request, transmitting, by the active tag via its antenna in a circular polarized mode, an uplink positioning radio signal to the anchor node.

11. The method of claim 10, further comprising:
transmitting (802), by the anchor node via its antenna in a linear mode, the downlink radio signal comprising the general request (804) to the active tag;
receiving (812), by the anchor node via its antenna in the linear mode, the uplink general radio signal from the active tag in response to the general request;
transmitting (802), by the anchor node via its antenna in the linear mode, the downlink radio signal comprising the position request (806) to the active tag; and
receiving (820), by the anchor node via its antenna in the circular polarized mode, the uplink positioning radio signal from the active tag in response to the position request.

12. The method of any preceding claim 10-11, further comprising:
measuring (821), by the anchor node, a received signal strength from the uplink positioning radio signal for use in a positioning of the active tag.

13. The method of any preceding claim 10-12, further comprising:
analyzing (822), by the anchor node, a polarization direction of the uplink positioning radio signal; and
if (824) the polarization direction has changed into an opposite direction as compared to an expected direction, ignoring, by the anchor node, the uplink positioning radio signal, or else using the uplink positioning radio signal in a positioning of the active tag.

14. The method any preceding claim 10-13, further comprising:
using (826), by the anchor node, the uplink positioning radio signal in a positioning of the active tag together with uplink positioning radio signals received by at least two additional anchor nodes.

15. The method of any preceding claim 10-14, further comprising:
if the downlink radio signal comprises the position request, before transmitting the uplink positioning radio signal to the anchor node,
receiving (816), by the active tag via its antenna in the circular polarized mode, a plurality of downlink positioning radio signals from the anchor node and at least two additional anchor nodes; and
embedding (818), by the active tag, information regarding reception of the plurality of the downlink positioning radio signals into the uplink positioning radio signal; and
if (828) the uplink positioning radio signal contains the information regarding the reception of the plurality of the downlink positioning radio signals by the active tag, using, by the anchor node, the information regarding the reception of the plurality of the downlink positioning radio signals by the active tag in a positioning of the active tag.

## Patentansprüche

1. Aktives Tag (100), das Folgendes umfasst:
eine Stromquelle (102);
einen Funksendeempfänger (104);
eine Antenne (106);
einen Antennenschalter (112), der dazu ausgelegt ist, die Antenne (106) zwischen einem linearen Modus (108) und einem zirkularen polarisierten Modus (110) umzuschalten; und
einen Prozessor (120), der dazu ausgelegt ist, eine Durchführung von mindestens Folgendem zu veranlassen:
Empfangen (808) eines Downlinkfunksignals (160A) durch den Funksendeempfänger (104) via die Antenne (106) im linearen Modus (108) von einem Ankerknoten (130);
wenn (810) das Downlinkfunksignal (160A) eine allgemeine Anforderung (804) umfasst, Übertragen eines allgemeinen Uplinkfunksignals (160B) durch den Funksendeempfänger (104) via die Antenne (106) im linearen Modus (108) zum Ankerknoten (130);
oder andernfalls wenn (814) das Downlinkfunksignal (160A) eine Positionsanforderung (806) umfasst, Umschalten unter Verwendung des Antennenschalters (112) der Antenne (106) in den zirkularen polarisierten Modus (110) und Übertragen eines Uplinkpositionsbestimmungsfunksignals (170B) durch den Funksendeempfänger (104) via die Antenne (106) im zirkularen polarisierten Modus (110) zum Ankerknoten (130).

2. Aktives Tag nach Anspruch 1, wobei die Antenne (106) Folgendes umfasst:
ein lineares Antennenelement (200), das dazu ausgelegt ist, im linearen Modus (108) betrieben zu werden, und ein zirkulares polarisiertes Antennenelement (202), das dazu ausgelegt ist, im zirkularen polarisierten Modus (110) betrieben zu werden; oder
ein parasitäres Antennenelement (300), das, wenn es vom Antennenschalter (112) ausgeschaltet wird, dazu ausgelegt ist, den linearen Modus (108) zu aktivieren, und, wenn es vom Antennenschalter (112) eingeschaltet wird, den zirkularen polarisierten Modus (110) zu aktivieren; oder
eine Patchantenne (402) mit zwei Eingängen und einem Schalter (400) in einem der Eingänge, der dazu ausgelegt ist, die Antenne (106) im linearen Modus (108) oder im zirkularen polarisierten Modus (110) zu betreiben.

3. Aktives Tag nach einem der vorhergehenden Ansprüche 1-2, wobei, wenn das Downlinkfunksignal (160A) die Positionsanforderung (806) umfasst, der Prozessor (120), nachdem die Antenne (106) in den zirkularen polarisierten Modus (110) geschaltet wurde, und vor Übertragen des Uplinkpositionsbestimmungsfunksignals (170B) zum Ankerknoten (130) dazu ausgelegt ist, die Durchführung von mindestens Folgendem zu veranlassen:
Empfangen (816) einer Vielzahl von Downlinkpositionsbestimmungsfunksignalen (170A) durch den Funksendeempfänger (104) via die Antenne (106) im zirkularen polarisierten Modus (110) vom Ankerknoten (130) und von mindestens zwei zusätzlichen Ankerknoten; und
Einbetten (818) von Informationen über den Empfang der Vielzahl von Downlinkpositionsbestimmungsfunksignalen (170A) in das Uplinkpositionsbestimmungsfunksignal (170B).

4. Ankerknoten (130) für das aktive Tag (100) nach einem der vorhergehenden Ansprüche 1-3, wobei der Ankerknoten (130) Folgendes umfasst:
eine Stromquelle (132);
einen Funksendeempfänger (134);
eine Antenne (136);
einen Antennenschalter (142), der dazu ausgelegt ist, die Antenne (136) zwischen einem linearen Modus (138) und einem zirkularen polarisierten Modus (140) umzuschalten; und
einen Prozessor (150), der dazu ausgelegt ist, eine Durchführung von mindestens Folgendem zu veranlassen:
Übertragen (802) des Downlinkfunksignals (160A), das die allgemeine Anforderung (804) umfasst, durch den Funksendeempfänger (134) via die Antenne (136) im linearen Modus (138) zum aktiven Tag (100);
Empfangen (812) des allgemeinen Uplinkfunksignals (160B) durch den Funksendeempfänger (134) via die Antenne (136) im linearen Modus (138) vom aktiven Tag (100) in Reaktion auf die allgemeine Anforderung (804);
Übertragen (802) des Downlinkfunksignals (160A), das die Positionsanforderung (806) umfasst, durch den Funksendeempfänger (134) via die Antenne (136) im linearen Modus (138) zum aktiven Tag (100); und
Schalten der Antenne (136) unter Verwendung des Antennenschalters (142) in den zirkularen polarisierten Modus (150) und Empfangen (820) des Uplinkpositionsbestimmungsfunksignals (170B) durch den Funksendeempfänger (134) via die Antenne (136) im zirkularen polarisierten Modus (140) vom aktiven Tag (100) in Reaktion auf die Positionsanforderung (806).

5. Ankerknoten nach Anspruch 4, wobei die Antenne (136) Folgendes umfasst:
ein lineares Antennenelement (200), das dazu ausgelegt ist, im linearen Modus (138) betrieben zu werden, und ein zirkulares polarisiertes Antennenelement (202), das dazu ausgelegt ist, im zirkularen polarisierten Modus (140) betrieben zu werden; oder
ein parasitäres Antennenelement (300), das, wenn es vom Antennenschalter (142) ausgeschaltet wird, dazu ausgelegt ist, den linearen Modus (138) zu aktivieren, und, wenn es vom Antennenschalter (142) eingeschaltet wird, den zirkularen polarisierten Modus (140) zu aktivieren; oder
eine Patchantenne (402) mit zwei Eingängen und einem Schalter (400) in einem der Eingänge, der dazu ausgelegt ist, die Antenne (136) im linearen Modus (138) oder im zirkularen polarisierten Modus (140) zu betreiben.

6. Ankerknoten nach einem der vorhergehenden Ansprüche 4-5, wobei der Prozessor (150) dazu ausgelegt ist, eine Durchführung von mindestens Folgendem zu veranlassen:
Messen (821) einer Empfangssignalstärke vom Uplinkpositionsbestimmungsfunksignal (170B) zur Verwendung bei einer Positionsbestimmung des aktiven Tags (100).

7. Ankerknoten nach einem der vorhergehenden Ansprüche 4-6, wobei der Prozessor (150) dazu ausgelegt ist, eine Durchführung von mindestens Folgendem zu veranlassen:
Analysieren (822) einer Polarisierungsrichtung des Uplinkpositionsbestimmungsfunksignals (170B); und
wenn (824) sich die Polarisierungsrichtung verglichen mit einer erwarteten Richtung in eine entgegengesetzte Richtung geändert hat, Ignorieren des Uplinkpositionsbestimmungsfunksignals (170B) oder andernfalls Verwenden des Uplinkpositionsbestimmungsfunksignals (170B) bei einer Positionsbestimmung des aktiven Tags (100).

8. Ankerknoten nach einem der vorhergehenden Ansprüche 4-7, wobei der Prozessor (150) dazu ausgelegt ist, eine Durchführung von mindestens Folgendem zu veranlassen:
Verwenden (826) des Uplinkpositionsbestimmungsfunksignals (170B) bei einer Positionsbestimmung des aktiven Tags (100) zusammen mit einer Vielzahl von Uplinkpositionsbestimmungsfunksignalen, die von mindestens zwei zusätzlichen Ankerknoten empfangen werden.

9. Ankerknoten nach einem der vorhergehenden Ansprüche 4-8, wobei der Prozessor (150) dazu ausgelegt ist, eine Durchführung von mindestens Folgendem zu veranlassen:
wenn (828) das Uplinkpositionsbestimmungsfunksignal (170B) die Informationen über den Empfang der Vielzahl von Downlinkpositionsbestimmungsfunksignalen (170A) durch das aktive Tag (100) enthält, Verwenden der Informationen über den Empfang der Vielzahl von Downlinkpositionsbestimmungsfunksignalen (170A) durch das aktive Tag (100) bei einer Positionsbestimmung des aktiven Tags (100) .

10. Positionsbestimmungsverfahren unter Verwendung eines aktiven Tags und eines Ankerknotens, das Folgendes umfasst:
Empfangen (808) eines Downlinkfunksignals durch das aktive Tag via dessen Antenne in einem linearen Modus vom Ankerknoten;
wenn (810) das Downlinkfunksignal eine allgemeine Anforderung umfasst, Übertragen eines allgemeinen Uplinkfunksignals durch das aktive Tag via die Antenne im linearen Modus zum Ankerknoten;
oder andernfalls wenn (814) das Downlinkfunksignal eine Positionsanforderung umfasst, Übertragen eines Uplinkpositionsbestimmungsfunksignals durch das aktive Tag via dessen Antenne im zirkularen polarisierten Modus zum Ankerknoten.

11. Verfahren nach Anspruch 10, das ferner Folgendes umfasst:
Übertragen (802) des Downlinkfunksignals, das die allgemeine Anforderung (804) umfasst, durch den Ankerknoten via dessen Antenne in einem linearen Modus zum aktiven Tag;
Empfangen (812) des allgemeinen Uplinkfunksignals durch den Ankerknoten via dessen Antenne im linearen Modus vom aktiven Tag in Reaktion auf die allgemeine Anforderung;
Übertragen (802) des Downlinkfunksignals, das die Positionsanforderung (806) umfasst, durch den Ankerknoten via dessen Antenne im linearen Modus zum aktiven Tag; und
Empfangen (820) des Uplinkpositionsbestimmungsfunksignals durch den Ankerknoten via dessen Antenne im zirkularen polarisierten Modus vom aktiven Tag in Reaktion auf die Positionsanforderung.

12. Verfahren nach einem der vorhergehenden Ansprüche 10-11, das ferner Folgendes umfasst:
Messen (821) einer Empfangssignalstärke vom Uplinkpositionsbestimmungsfunksignal durch den Ankerknoten zur Verwendung bei einer Positionsbestimmung des aktiven Tags.

13. Verfahren nach einem der vorhergehenden Ansprüche 10-12, das ferner Folgendes umfasst:
Analysieren (822) einer Polarisierungsrichtung des Uplinkpositionsbestimmungsfunksignals durch den Ankerknoten; und
wenn (824) sich die Polarisierungsrichtung verglichen mit einer erwarteten Richtung in eine entgegengesetzte Richtung geändert hat, Ignorieren des Uplinkpositionsbestimmungsfunksignals durch den Ankerknoten oder andernfalls Verwenden des Uplinkpositionsbestimmungsfunksignals bei einer Positionsbestimmung des aktiven Tags.

14. Verfahren nach einem der vorhergehenden Ansprüche 10-13, das ferner Folgendes umfasst:
Verwenden (826) des Uplinkpositionsbestimmungsfunksignals durch den Ankerknoten bei einer Positionsbestimmung des aktiven Tags zusammen mit Uplinkpositionsbestimmungsfunksignalen, die von mindestens zwei zusätzlichen Ankerknoten empfangen werden.

15. Verfahren nach einem der vorhergehenden Ansprüche 10-14, das ferner Folgendes umfasst:
wenn das Downlinkfunksignal die Positionsanforderung umfasst, vor Übertragen des Uplinkpositionsbestimmungsfunksignals zum Ankerknoten,
Empfangen (816) einer Vielzahl von Downlinkpositionsbestimmungsfunksignalen durch das aktive Tag via dessen Antenne im zirkularen polarisierten Modus vom Ankerknoten und von mindestens zwei zusätzlichen Ankerknoten; und
Einbetten (818) von Informationen über den Empfang der Vielzahl von Downlinkpositionsbestimmungsfunksignalen in das Uplinkpositionsbestimmungsfunksignal durch das aktive Tag; und
wenn (828) das Uplinkpositionsbestimmungsfunksignal die Informationen über den Empfang der Vielzahl von Downlinkpositionsbestimmungsfunksignalen durch das aktive Tag enthält, Verwenden der Informationen über den Empfang der Vielzahl von Downlinkpositionsbestimmungsfunksignalen durch den Ankerknoten bei einer Positionsbestimmung des aktiven Tags.

## Revendications

1. Étiquette active (100), comprenant :
une source de puissance (102) ;
un émetteur-récepteur radio (104) ;
une antenne (106) ;
un commutateur d'antenne (112) configuré pour commuter l'antenne (106) entre un mode linéaire (108) et un mode de polarisation circulaire (110) ; et
un processeur (120) configuré pour provoquer l'exécution d'au moins ce qui suit :
recevoir (808) d'un noeud d'ancrage (130), par l'émetteur-récepteur radio (104) via l'antenne (106) en mode linéaire (108), un signal radio de liaison descendante (160A) ;
si (810) le signal radio de liaison descendante (160A) comprend une demande générale (804), transmettre au noeud d'ancrage (130), par l'émetteur-récepteur radio (104) via l'antenne (106) en mode linéaire (108), un signal radio général de liaison montante (160B) ;
ou bien si (814) le signal radio de liaison descendante (160A) comprend une demande de position (806), commuter l'antenne (106) en mode de polarisation circulaire (110) à l'aide du commutateur d'antenne (112), et transmettre au noeud d'ancrage (130) un signal radio de positionnement de liaison montante (170B), par l'émetteur-récepteur radio (104) via l'antenne (106) en mode de polarisation circulaire (110).

2. Étiquette active de la revendication 1, dans laquelle l'antenne (106) comprend :
un élément d'antenne linéaire (200) configuré pour fonctionner en mode linéaire (108), et un élément d'antenne à polarisation circulaire (202) configuré pour fonctionner en mode de polarisation circulaire (110) ; ou
un élément d'antenne passif (300) configuré pour, lorsqu'il est mis à l'arrêt par le commutateur d'antenne (112), activer le mode linéaire (108), et lorsqu'il est mis en marche par le commutateur d'antenne (112), activer le mode de polarisation circulaire (110) ; ou
une antenne à plaque à double entrée (402) ayant un commuter (400) dans l'une des entrées configuré pour faire fonctionner l'antenne (106) en mode linéaire (108) ou en mode de polarisation circulaire (110).

3. Étiquette active de l'une des revendications précédentes 1 et 2, dans laquelle, si le signal radio de liaison descendante (160A) comprend la demande de position (806), après avoir commuté l'antenne (106) en mode de polarisation circulaire (110) et avant de transmettre le signal radio de positionnement de liaison montante (170B) au noeud d'ancrage (130), le processeur (120) est configuré pour provoquer l'exécution d'au moins ce qui suit :
recevoir (816) du noeud d'ancrage (130) et d'au moins deux noeuds d'ancrage supplémentaires, par l'émetteur-récepteur radio (104) via l'antenne (106) en mode de polarisation circulaire (110), une pluralité de signaux radio de positionnement de liaison descendante (170A) ; et
intégrer (818) des informations concernant la réception de la pluralité de signaux radio de positionnement de liaison descendante (170A) dans le signal radio de positionnement de liaison montante (170B).

4. Noeud d'ancrage (130) pour l'étiquette active (100) de l'une des revendications précédentes 1 à 3, le noeud d'ancrage (130) comprenant :
une source de puissance (132) ;
un émetteur-récepteur radio (134) ;
une antenne (136) ;
un commutateur d'antenne (142) configuré pour commuter l'antenne (136) entre un mode linéaire (138) et un mode de polarisation circulaire (140) ; et
un processeur (150) configuré pour provoquer l'exécution d'au moins ce qui suit :
transmettre (802), par l'émetteur-récepteur radio (134) via l'antenne (136) en mode linéaire (138), le signal radio de liaison descendante (160A) comprenant la demande générale (804) à l'étiquette active (100) ;
recevoir (812) de l'étiquette active (100), par l'émetteur-récepteur radio (134) via l'antenne (136) en mode linéaire (138), le signal radio général de liaison montante (160B) en réponse à la demande générale (804) ;
transmettre (802) à l'étiquette active (100), par l'émetteur-récepteur radio (134) via l'antenne (136) en mode linéaire (138), le signal radio de liaison descendante (160A) comprenant la demande de position (806) ; et
commuter l'antenne (136) en mode de polarisation circulaire (150) à l'aide du commutateur d'antenne (142), et recevoir (820) de l'étiquette active (100), par l'émetteur-récepteur radio (134) via l'antenne (136) en mode de polarisation circulaire (140), le signal radio de positionnement de liaison montante (170B) en réponse à la demande de position (806).

5. Noeud d'ancrage de la revendication 4, dans lequel l'antenne (136) comprend :
un élément d'antenne linéaire (200) configuré pour fonctionner en mode linéaire (138), et un élément d'antenne à polarisation circulaire (202) configuré pour fonctionner en mode de polarisation circulaire (140) ; ou
un élément d'antenne passif (300) configuré pour, lorsqu'il est mis à l'arrêt par le commutateur d'antenne (142), activer le mode linéaire (138), et lorsqu'il est mis en marche par le commutateur d'antenne (142), activer le mode de polarisation circulaire (140) ; ou
une antenne à plaque à double entrée (402) ayant un commuter (400) dans l'une des entrées configuré pour faire fonctionner l'antenne (136) en mode linéaire (138) ou en mode de polarisation circulaire (140).

6. Noeud d'ancrage de l'une des revendications précédentes 4 et 5, dans lequel le processeur (150) est configuré pour provoquer l'exécution d'au moins ce qui suit :
mesurer (821) une intensité de signal reçue du signal radio de positionnement de liaison montante (170B) pour son utilisation dans un positionnement de l'étiquette active (100).

7. Noeud d'ancrage de l'une des revendications précédentes 4 à 6, dans lequel le processeur (150) est configuré pour provoquer l'exécution d'au moins ce qui suit :
analyser (822) une direction de polarisation du signal radio de positionnement de liaison montante (170B) ; et
si (824) la direction de polarisation a changé dans une direction opposée par rapport à une direction attendue, ignorer le signal radio de positionnement de liaison montante (170B), ou bien utiliser le signal radio de positionnement de liaison montante (170B) dans un positionnement de l'étiquette active (100).

8. Noeud d'ancrage de l'une des revendications précédentes 4 à 7, dans lequel le processeur (150) est configuré pour provoquer l'exécution d'au moins ce qui suit :
utiliser (826) le signal radio de positionnement de liaison montante (170B) dans un positionnement de l'étiquette active (100) avec une pluralité de signaux radio de positionnement de liaison montante reçus par au moins deux noeuds d'ancrage supplémentaires.

9. Noeud d'ancrage de l'une des revendications précédentes 4 à 8, dans lequel le processeur (150) est configuré pour provoquer l'exécution d'au moins ce qui suit :
si (828) le signal radio de positionnement de liaison montante (170B) contient les informations relatives à la réception de la pluralité de signaux radio de positionnement de liaison descendante (170A) par l'étiquette active (100), utiliser les informations relatives à la réception de la pluralité de signaux radio de positionnement de liaison descendante (170A) par l'étiquette active (100) dans un positionnement de l'étiquette active (100).

10. Procédé de positionnement utilisant une étiquette active et un noeud d'ancrage, comprenant :
la réception (808) du noeud d'ancrage, par l'étiquette active via son antenne dans un mode linéaire, d'un signal radio de liaison descendante ;
si (810) le signal radio de liaison descendante comprend une demande générale,
la transmission au noeud d'ancrage, par l'étiquette active via l'antenne en mode linéaire, d'un signal radio général de liaison montante ;
ou bien si (814) le signal radio de liaison descendante comprend une demande de position,
la transmission au noeud d'ancrage, par l'étiquette active via son antenne dans un mode de polarisation circulaire, d'un signal radio de positionnement de liaison montante.

11. Procédé de la revendication 10, comprenant en outre :
la transmission (802) à l'étiquette active, par le noeud d'ancrage via son antenne dans un mode linéaire, le signal radio de liaison descendante comprenant la demande générale (804) ;
la réception (812) de l'étiquette active, par le noeud d'ancrage via son antenne en mode linéaire, du signal radio général de liaison montante en réponse à la demande générale-transmettre (802) à l'étiquette active, par le noeud d'ancrage via son antenne en mode linéaire, le signal radio de liaison descendante comprenant la demande de position (806) ; et
la réception (820) de l'étiquette active, par le noeud d'ancrage via son antenne en mode de polarisation circulaire, le signal radio de positionnement de liaison montante en réponse à la demande de position.

12. Procédé de l'une des revendications précédentes 10 et 11, comprenant en outre :
la mesure (821), par le noeud d'ancrage, d'une intensité de signal reçue du signal radio de positionnement de liaison montante pour son utilisation dans un positionnement de l'étiquette active.

13. Procédé de l'une des revendications précédentes 10 à 12, comprenant en outre :
l'analyse (822), par le noeud d'ancrage, d'une direction de polarisation du signal radio de positionnement de liaison montante ; et
si (824) la direction de polarisation a changé dans une direction opposée par rapport à une direction attendue, l'ignorance, par le noeud d'ancrage, du signal radio de positionnement de liaison montante, ou bien l'utilisation du signal radio de positionnement de liaison montante dans un positionnement de l'étiquette active.

14. Procédé de l'une des revendications précédentes 10 à 13, comprenant en outre :
l'utilisation (826), par le noeud d'ancrage, du signal radio de positionnement de liaison montante dans un positionnement de l'étiquette active avec des signaux radio de positionnement de liaison montante reçus par au moins deux noeuds d'ancrage supplémentaires.

15. Procédé de l'une des revendications précédentes 10 à 14, comprenant en outre :
si le signal radio de liaison descendante comprend la demande de position, avant de transmettre le signal radio de positionnement de liaison montante au noeud d'ancrage,
la réception (816), par l'étiquette active via son antenne en mode de polarisation circulaire, d'une pluralité de signaux radio de positionnement de liaison descendante du noeud d'ancrage et d'au moins deux noeuds d'ancrage supplémentaires ; et
l'intégration (818), par l'étiquette active, d'informations relatives à la réception de la pluralité de signaux radio de positionnement de liaison descendante dans le signal radio de positionnement de liaison montante ; et
si (828) le signal radio de positionnement de liaison montante contient les informations relatives à la réception de la pluralité de signaux radio de positionnement de liaison descendante par l'étiquette active, utiliser, par le noeud d'ancrage, les informations relatives à la réception de la pluralité de signaux radio de positionnement de liaison descendante par l'étiquette active dans un positionnement de l'étiquette active.
